# EUROPEAN PATENT SPECIFICATION

(11) **EP 3 303 883 B1**
(45) Date of publication and mention of the grant of the patent: **20.02.2019**
(21) Application number: 16739277.8
(22) Date of filing: 20.05.2016
(51) Int. Cl.: F16H 63/18, F16H 63/28

(54) **MECHANICAL SEQUENTIAL GEARBOX**
MECHANISCHES SEQUENZIELLES GETRIEBE
BOÎTE DE VITESSES SÉQUENTIELLE MÉCANIQUE

(30) Priority: 25.05.2015 IT UB20150682
(43) Date of publication of application: 11.04.2018
(73) Proprietor: FPF di Frullini & Fusi SNC, 50058 Signa (Fl) (IT)
(72) Inventor: FRULLINI, Paolo, I-50058 Signa (Fl) (IT)
(74) Representative: Mincone, Antimo
(86) International application number: PCT/IT2016/000131
(87) International publication number: WO 2016/189561

(56) References cited:
- FR-A1- 2 844 570
- US-A- 2 577 019
- US-A- 3 370 477

## Description

The present invention relates to the realization of a mechanical sequential gearbox.

More particularly, the present invention aims to facilitate the return to the neutral position from any gear ratio inserted in a mechanically operated sequential gearbox.

It is known that motorcycles are generally provided with a sequential gearbox, in which the gear change is carried out by acting on a lever which is snap moved in one direction or in the opposite one to select the next-higher or next-lower gear, without any possibility of meshing not adjacent gears. Other vehicles equipped with sequential gearbox are the go-karts and racing cars. When the sequential gearbox is mechanical, that is, devoid of hydraulic, electrohydraulic or electronic servomechanisms, it includes a desmodromic selector, or a desmodromic cam intended to the actuation of the coupling forks of the gears according to a predetermined sequence. The main advantages of this mechanism are that it is impossible to miss the sequence of gears, both upward and downward, and that the gear change time is less than in non-sequential manual gearboxes with a "H" scheme. However, when the vehicle stops, either accidentally or for will of the pilot, the search of the neutral position, especially if the engaged gear is high, is a difficult and slow operation. In fact, in most modern vehicles the sequential automatic gearbox usually have six-speed and, therefore, starting from the sixth gear, it is necessary to change five-speed for reaching the neutral position. This disadvantage is particularly important in motor racing with vehicles equipped with a mechanical sequential gearbox, it being evident that the restart following, for example, an off the track situation, involves the preliminary search of the neutral position, with loss of precious seconds for the race standings.

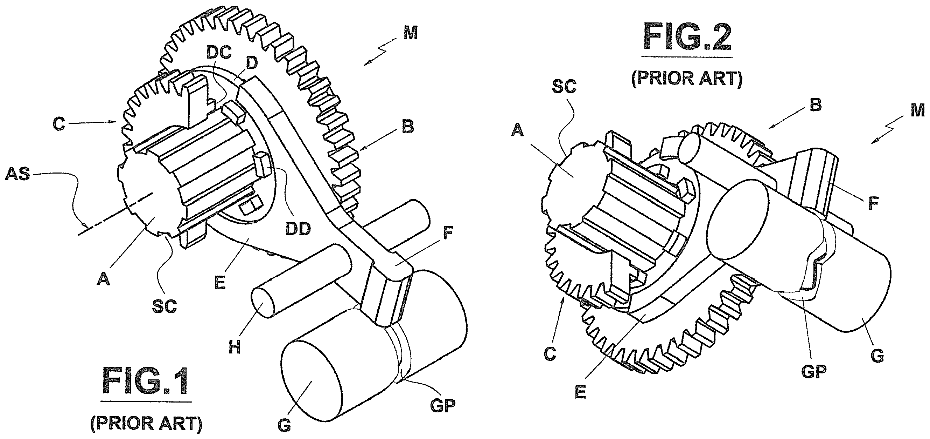

Figs. 1-2 schematically show a module of a mechanical sequential gearbox of the conventional type, constituted by a plurality of modules (M) aligned along an axial direction (AS) defined by the splined shaft (A), wherein each module comprises a toothed wheel of the lower gear (B) and a toothed wheel of the higher gear (C) externally mounted coaxial to the shaft (A), a clutch (D) with internal toothing sliding on the shaft (A), a fork (E) which engages the clutch (D) laterally, a pin (F) on the tail of the fork (E) which engages the inner track (GP) of a desmodromic cam (G), a rod (H) oriented parallel to the shaft (A) and on which can slide the fork (E) that, for this purpose, is provided with a through hole crossed by the rod (H), clutch teeth (DC, DD) oriented parallel to the shaft (A) and arranged on the toothed wheels (B, C) and respectively on the clutch (D). The cam (G) can rotate around an axis parallel to the shaft (A). The whole gearbox is formed by several modules (M) aligned along the shaft (A) and operated by the same cam that has a series of tracks (GP) suitably angularly offset along the development axis of the same cam (G). With reference to each module (M), the toothed wheels (B, C) are idle on the shaft (A) and the clutch (D) is integral with the shaft (A) in correspondence of the grooves (SC) of the latter, where are engaged the teeth of the clutch (D). When the cam (G) is rotated, the relative track (GP) determines the translation of the pin (F) that, consequently, causes a corresponding translation of the fork (E) along the rod (H) and of the clutch (D) along the shaft (A). Therefore, the teeth (DD) of the clutch (D) engage the teeth (DC) of the wheel (C), or the homologous teeth of the wheel (B) if the fork is made to translate to the right instead of to the left, causing the engagement of the preselected gear. As mentioned before, the whole gearbox is formed by several modules (M), each of which is structured and functions as described and is placed at a corresponding position on the shaft (A), and, for this reason, it has the desired number of gears that are engaged in a predetermined sequence (for example in the sequence 1-2-3-4-5-6 to rise and to go down in the sequence 6-5-4-3-2-1).

A mechanical sequential gearbox according to the preamble of claim 1 is described in FR2844570.

The main purpose of the present invention is to obviate said drawbacks.

This result has been achieved, in accordance with the invention, by adopting the idea to make a sequential mechanical gearbox having the features indicated in claim 1. Other features of the invention are object of the dependent claims.

Among the advantages offered by the present invention there are the following: it is possible to reach the neutral position in a mechanical sequential gearbox from any gear without having to downshift all gears with evident benefits in terms of simplicity and speed of the maneuver, which is even more advantageous when the mechanical sequential gearbox is mounted on vehicles for sporting and competition use, or in all applications in which the time required to reach the neutral position must be reduced to a minimum.

These and other advantages and characteristics of the invention will be best apparent to any skilled in the art thanks to the following description and to the attached drawings, provided by way of example but not to be considered in a limitative sense, wherein:
- Fig.1 schematically represents a module of a mechanical sequential gearbox of the conventional type;
- Fig.2 shows a further view of the module shown in Fig.1;
- Figs.3-7 schematically represent a module of a mechanical sequential gearbox in accordance with the present invention seen from different perspectives and in different operational configurations;
- Fig.8 is a perspective view of a mechanical sequential gearbox in accordance with a first example of embodiment of the present invention with the desmodromic cam in the neutral position;
- Fig.9 represents the gearbox of Fig.8 seen from the above;
- Fig.10 represents the gearbox of Fig.8 in a side view;
- Fig.11 is a view of the gearbox of Fig. 9 according to a section along the line A-A of Fig.9;
- Fig.12 represents the gearbox of Fig.8 in position of sixth gear engaged;
- Figs. 13 and 14 represent a top plan view and a side view of the gearbox shown in Fig.12;
- Fig.15 is a view of the gearbox of Fig. 13 according to a section along the line B-B of Fig.13;
- Fig.16 represents the gearbox of Fig.8 during the disengagement of the transmission with the desmodromic cam still in the position of the sixth gear engaged;
- Figs. 17 and 18 represent a top plan view and a side view of the gearbox shown in Fig.16;
- Fig.19 is a view of the gearbox of Fig.16 according to a section along the line C-C of Fig.17;
- Fig.20 is a perspective view of a mechanical sequential gearbox in accordance with a further example of embodiment of the present invention with the transmission in neutral position;
- Fig.21 is a top plan view of the gearbox of Fig.20;
- Fig.22 is a view of the gearbox of Fig.21 according to a section along the line D-D of Fig.21;
- Fig.23 shows the gearbox of Figs.20-22 in a disengaging configuration of the selector from the desmodromic cam;
- Fig.24 is an enlarged detail of Fig.23;
- Fig.25 is an enlarged detail of Fig.21;
- Figs.26 and 27 are longitudinal section views of a fork in the configuration of engagement of the respective pin to the track of the control cam;
- Figs.28 and 29 are longitudinal section views of a fork in the disengaging configuration of the respective pin from the control cam track.

Reduced to its essential structure and with reference to the figures of the attached drawings, a mechanical sequential gearbox in accordance with the invention is of the type comprising several modules (Y) aligned along an axial direction (x) defined by a splined shaft (1) which is also denoted as first shaft and is the driven shaft of the gearbox. Each module (Y) comprises a toothed wheel of the lower gear (2) and a toothed wheel of the higher gear (3) mounted externally coaxial to the splined shaft (1), a clutch (4) sliding on the driven shaft (1), a fork (5) which engages the clutch (4) on the respective outer ring (41), a pin (6) on the tail of the fork (5) which engages a corresponding track (9) of a desmodromic cam (7), a guide rod (8) oriented parallel to the driven shaft (1) and on which can slide the fork (5) which for this purpose is provided with a through hole crossed by the rod (8), and clutch teeth (33, 44) oriented parallel to the driven shaft (1) and arranged on external sides of the toothed wheels (2, 3) and respectively on the clutch (4). The cam (7) is intended to rotate bi-directionally about a corresponding axis (k) parallel to the driven shaft (1).

The whole gearbox includes several modules (Y) aligned along the driven shaft (1) and connected to the cam (7) which has a series of tracks (9) in each of which a pin (6) of a corresponding module (Y) is engaged, as further described in the following.

The tracks (9) of the cam (7) are angularly offset from each other in such a way that, when a fork (5) is in the engaged position of a gear, the other forks are in the disengaged position.

With reference to each module (Y), the toothed wheels (2, 3) are idle on the driven shaft (1) and the clutch (4) is integral with the same shaft (1) in correspondence of the grooves (100) of the latter where the teeth (40) are engaging, projecting radially and centripetally from the inner ring of the same clutch (4). When the cam (7) is rotated, the relative track (9) determines the translation of the pin (6) which, consequently, causes a corresponding translation of the fork (5) along the longitudinal axis of the rod (8) and of the clutch (4) along the driven shaft (1). Therefore, the teeth (44) of the clutch (4) engage the teeth (33) of the wheel (3), or the homologous teeth of the wheel (2), if the fork is made to translate to the right instead of to the left, causing the engagement of the preselected gear with the mechanical connection of the selected toothed wheel (2) or (3) with the driven shaft (1).

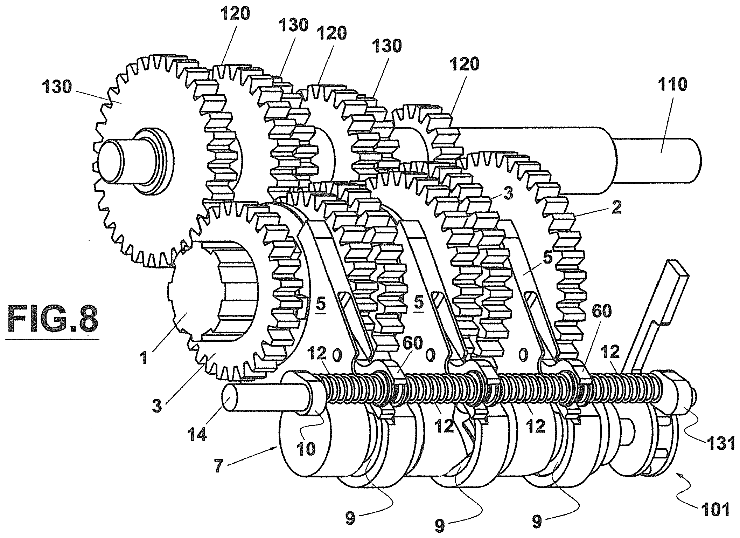

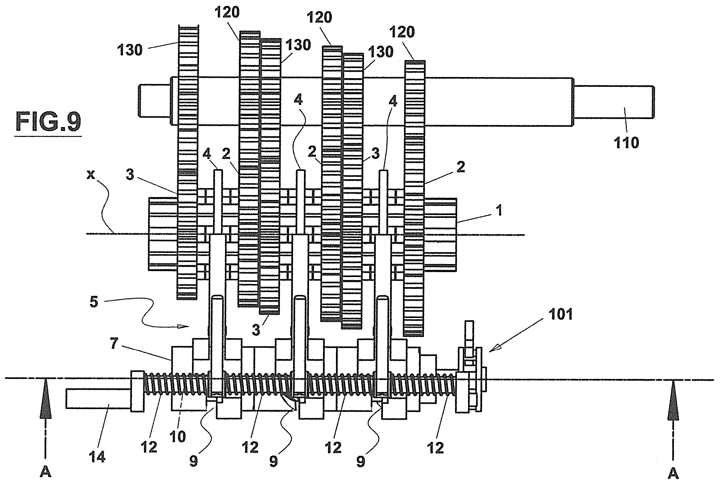

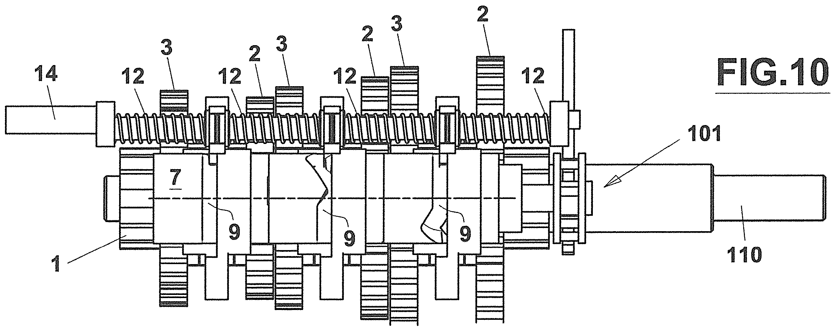

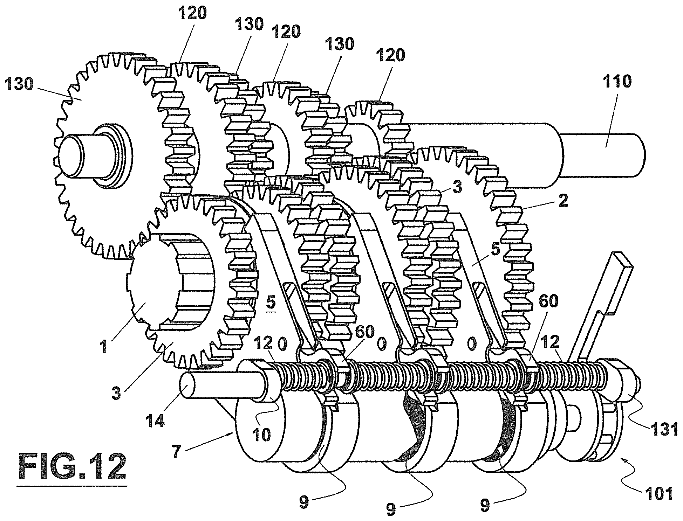

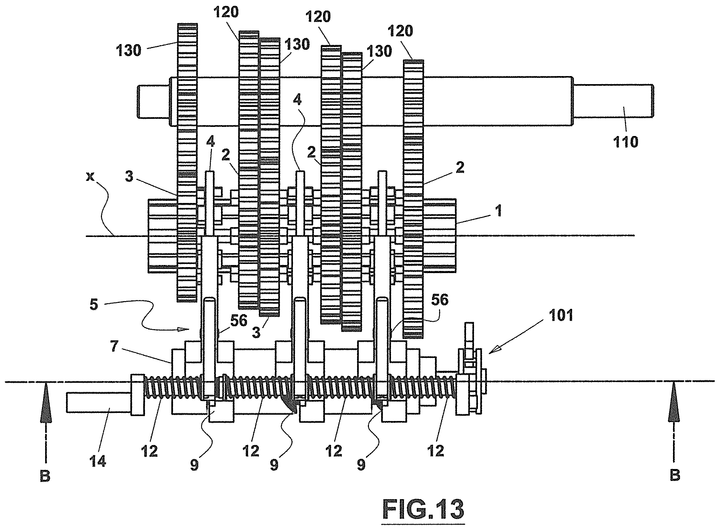

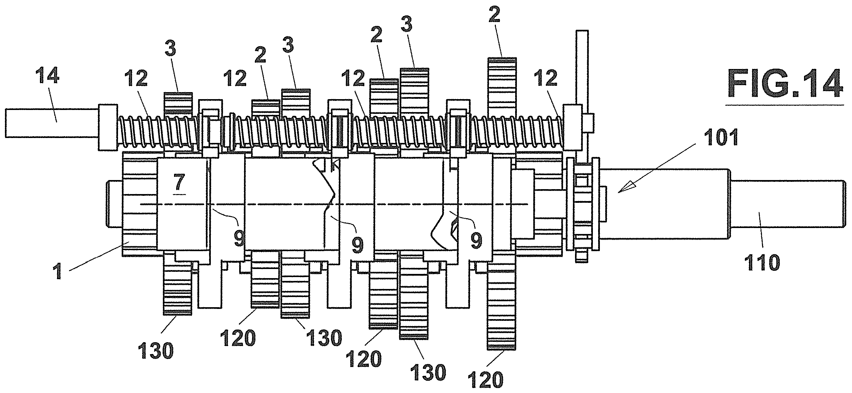

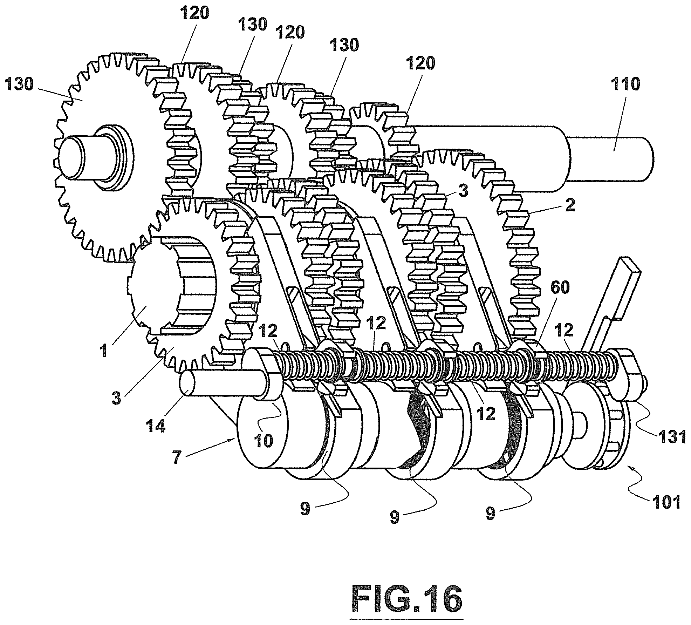

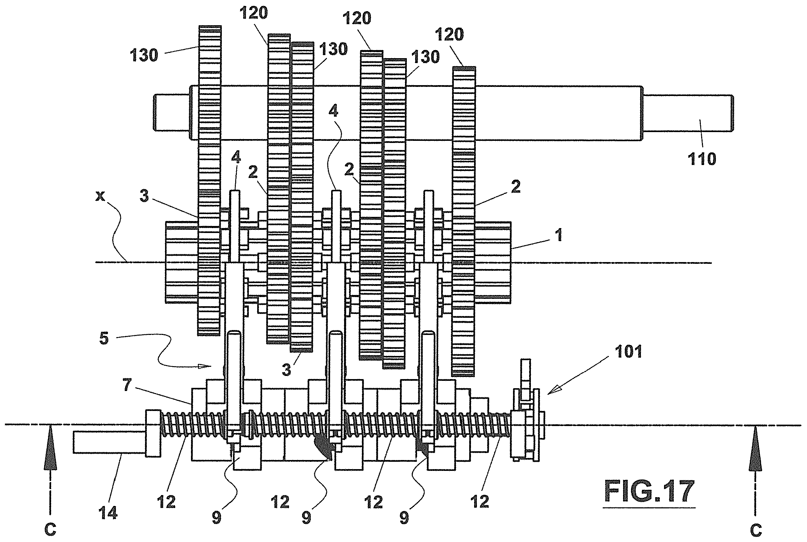

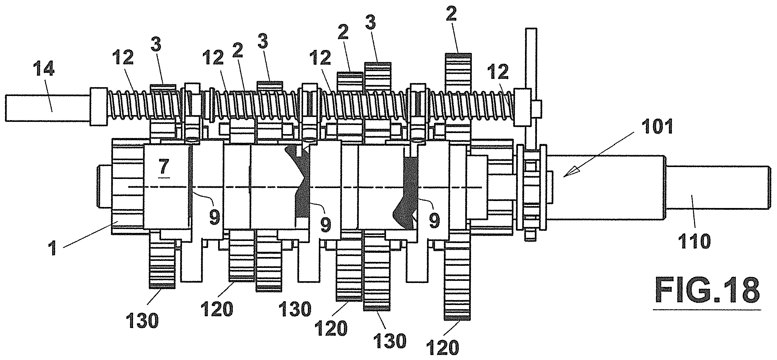

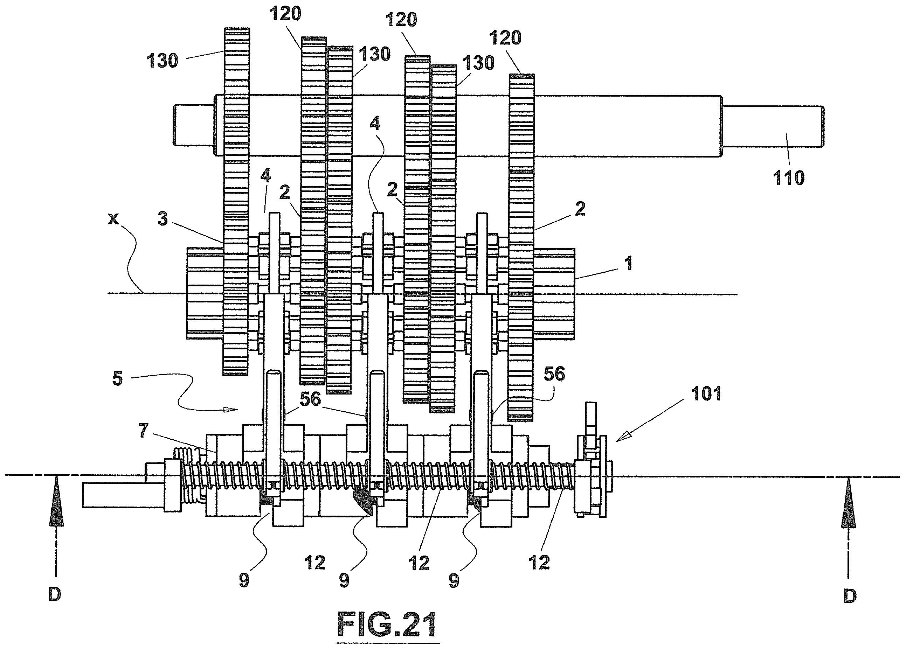

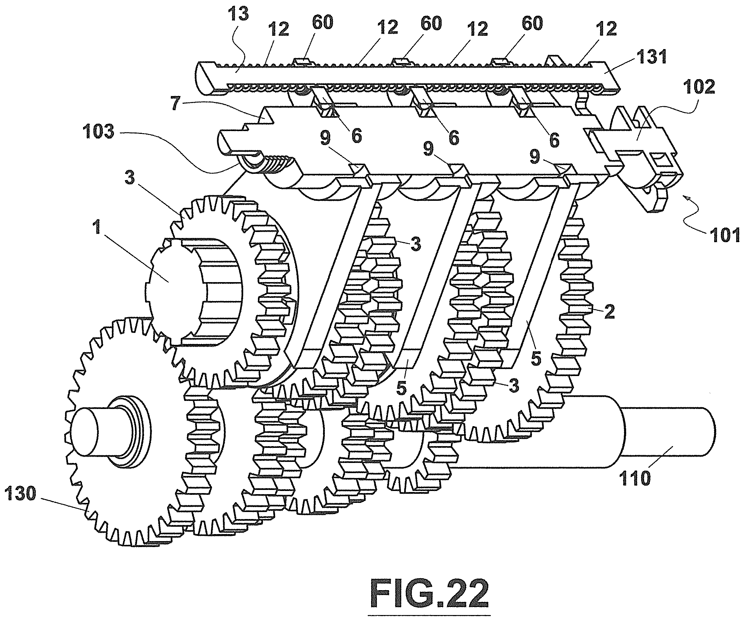

As mentioned before, a whole gearbox is formed by several modules (Y) each of which is structured and functions as described above and is placed in a corresponding position on the driven shaft (1); for this reason the gearbox has the desired number of gears that engage according to a predetermined sequence (for example, in a six-speed gearbox, in the sequence 1-2-3-4-5-6 to upshift and in the sequence 6-5-4-3-2-1 to downshift). The toothed wheels (2, 3) mounted on the shaft (1) are intended to engage externally the homologous toothed wheels of a primary shaft (visible in Figs.8-23).

Advantageously, a mechanical sequential gearbox in accordance with the present invention comprises a first mechanism to disengage each of the forks (5) from the respective track (9) of the cam (7) and a second mechanism to dispose each of the forks (5) in disengagement position after the disengagement operated by the first mechanism.

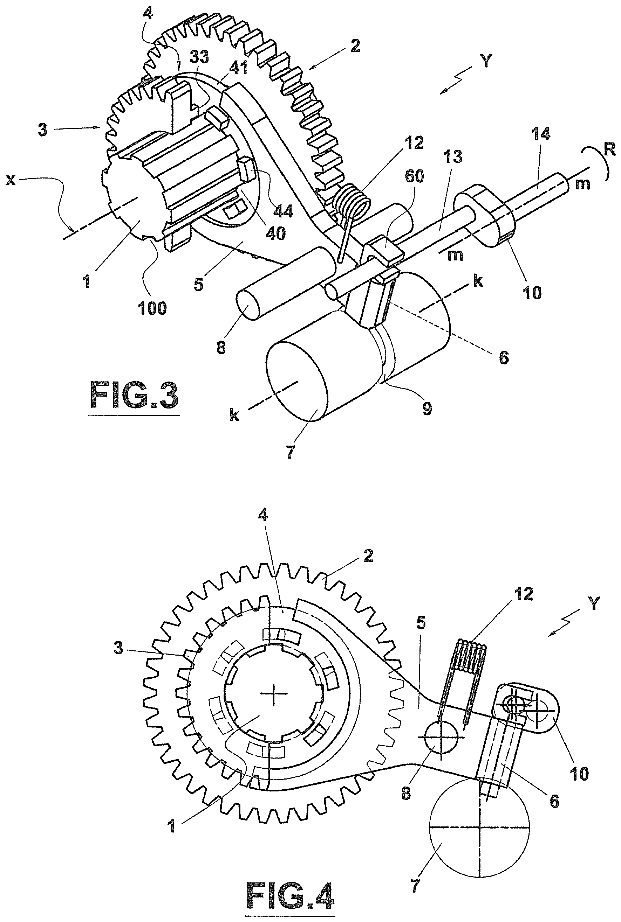

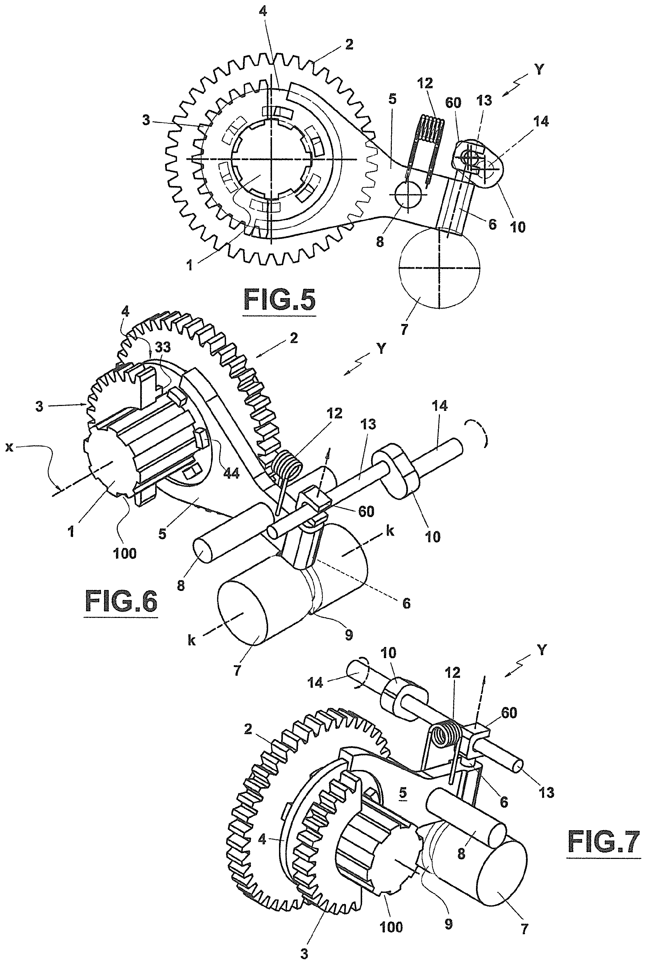

With reference to the example shown in Figs. 3-7, said first mechanism comprises a rod (13) parallel to the driven shaft (1) and to the rod (8), said rod (13) protruding from a body (10) adapted to rotate bi-directionally around an eccentric axis (m) under control of a lever which, for example, can be placed in the cockpit of the vehicle and that acts on a rear prolongation (14) of the same body (10) by means of a flexible-cable transmission (not shown in the drawings) or any other type of transmission. In Fig.3 the bidirectional rotation of the body (10) about said axis (m) is indicated by the double arrow "R". The rod (13) passes through an appendix (60) presented by the pin (6) on the side opposite to the part engaged in the respective track (9) of the cam (7).

Therefore, by rotating the body (10) about the axis (m) clockwise or counterclockwise, the pin (6) is correspondingly raised (disengaging it from the track 9) or lowered (putting again it in the engagement position in the track 9).

The second mechanism comprises an elastic body (12) acting transversely on the fork (5) and whose function is to keep the fork (5), and then the clutch (4), in the central position of disengagement between the wheels (2, 3). In Figs.3-7 the elastic body (12) is represented only schematically. A representation of the second mechanism corresponding to a possible embodiment is shown in Figs.8-23.

As previously mentioned, the second mechanism intervenes following the disengagement operated by the first mechanism. Therefore, the action of said first and second mechanism is sequential and, thanks to the elastic body (12), the second mechanism intervenes in in automatic mode, and for this reason the pilot must only control the operation of the first mechanism and not also the second.

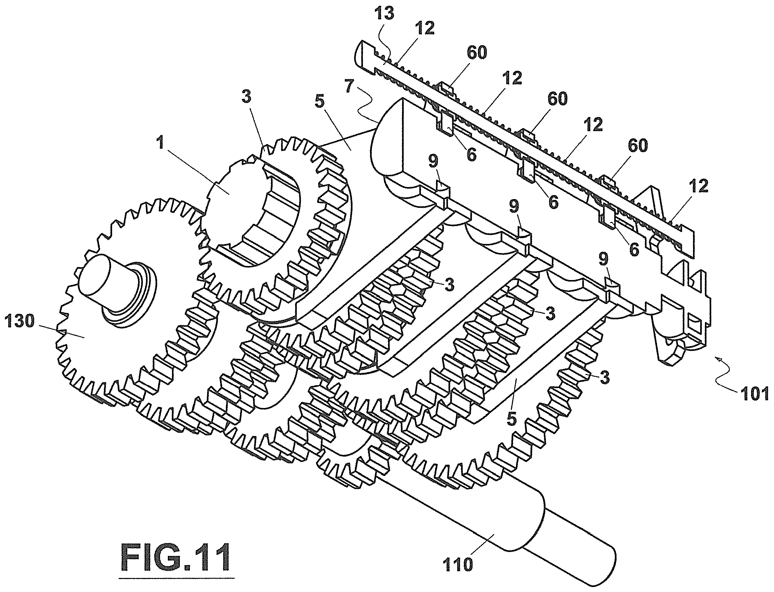

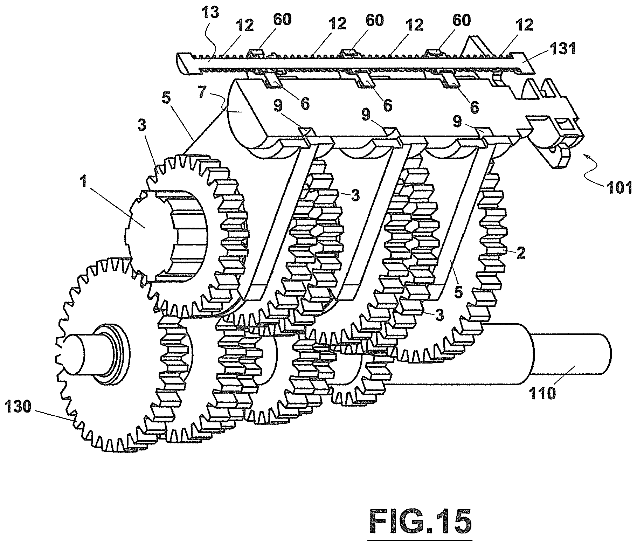

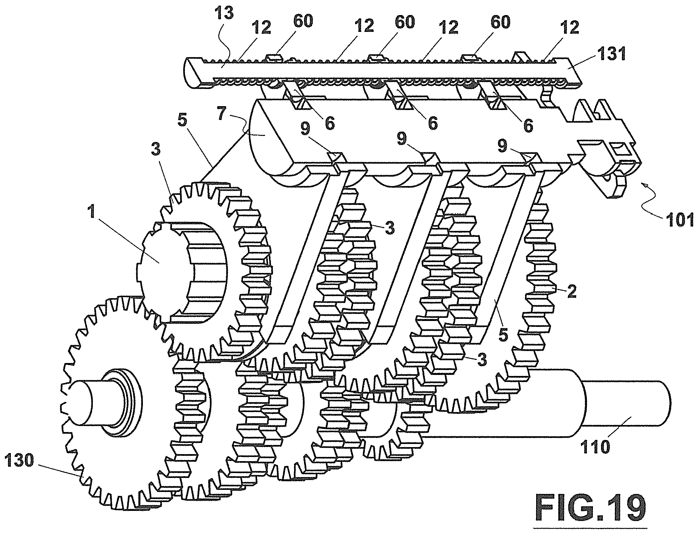

Figs. 8-19 show the whole sequential gearbox, six-speed transmission, formed by a plurality of modules each of which is structured and functioning as previously described. In these figures, it is also represented the primary or second shaft of the gearbox (110) on which are mounted the toothed wheels (120, 130) homologue of the wheels (2, 3) mounted on the driven shaft (1). The primary shaft (110) is parallel to the driven shaft (1) and spaced from the latter of a value such as to allow the external meshing of the homologous wheels (2, 120; 3, 130). The forks (5), as the related clutches (4), are three in number and said second mechanism is formed by four helical springs (12) fitted on the rod (13): a spring (12) is positioned between said body (10) and the appendix (60) of the pin of the fork (5) nearest to the same body (10); two springs (12) are positioned between the appendixes (60) of the pins of the next forks (5); and another spring (12) is positioned between the appendix (60) of the fork pin farthest from the body (10) and a support (131) in which is inserted the rod (13) on the opposite side to the body (10). The desmodromic cam (7) has three tracks (9), i.e. a track (9) for the pin (6) of each fork (5). In the same figures it is also represented the selector (101), connected to the gear lever in the cockpit of the vehicle, by which the cam (7) is rotated to change the gears (this selector, and the way in which it is connected to the gear lever and acts on the cam 7, are known to those skilled in the art). In particular, it can be noted in Fig.11 that the pins (6) are inserted in all respective tracks (9) of the cam (7) which is in the neutral position, whereby each of the clutches (4) connected to the forks (5) does not engage any of the gear wheels (2, 3) of the driven shaft (1). In Fig.15 it can be observed that all the pins (6) are inserted in the respective tracks (9). In Fig.19 it can be observed that, despite the cam (7) is not in the neutral position, since no pin (6) is in the respective track (9), the clutches (4) connected to the forks (5) are disengaged from the toothed wheels (2, 3) of the driven shaft (1), and therefore the transmission is in neutral position, that is, the driven shaft (1) is not driven by the main shaft (110). The cam (7) can then be reset to the neutral position (position of Figs.8-11) using the lever operated by the driver and acting on the selector (101). When the cam (7) returns in the neutral position, since all the forks (5) are in an intermediate position of disengagement - and the rod (13) is returned to the normal position of engagement of the pins (6) in the tracks (9) of the cam (7), for example as described in the following - the respective pins (6) are again in respective tracks (9) and the gearbox is in the neutral position, and therefore the pilot can operate it again for the re-start of the vehicle.

According to the example represented in Figs.8-23 the above-mentioned guide rod (8) is not provided since the forks (5) are fitted on the cam (7) which acts as a guide.

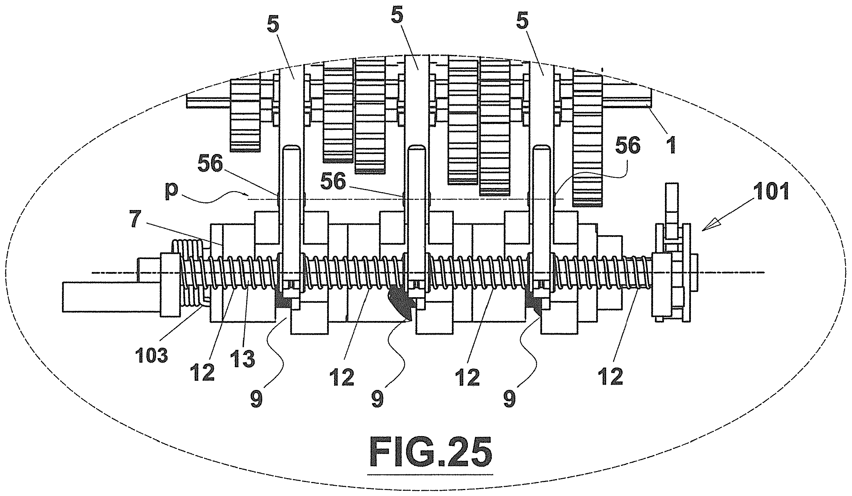

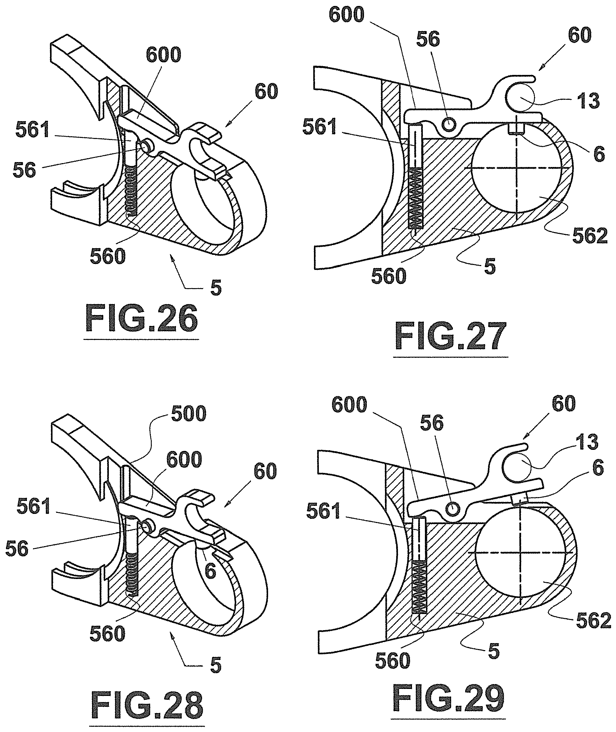

Furthermore, the appendixes (60) of the forks (5) are formed on levers each connected to an arm (500) of the respective fork (5) by a pin (56) with axis parallel to that of the driven shaft and the primary shaft; on the rear part (600) of each lever acts a spring (560), via a cylinder (561), which exerts a predetermined thrust on that part (600) of the lever, in such a way that in normal use condition of the gearbox the respective pin (6) engages the corresponding track (9) of the cam (7). When the pins (6) are disengaged from tracks (9) by spacing the rod (13) by the cam (7) as described above, the aforementioned levers, and then the appendixes (60), rotate on the pins (56) overcoming the resistance offered by the respective springs (560). And when the cam (7) is returned in the neutral position, the springs (560) push the pins (6) towards the respective tracks (9) thus causing the automatic re-engagement of the pins themselves with the control cam. As can be seen in the detail of Fig.25, said pins (56) are aligned along a same axis (P). Figs.26-29 illustrate in detail a possible embodiment of a fork (5) structured as described above. For sake of simplicity, the rod (13) is represented only in Fig. 27 and Fig.29. In Fig. 26 and Fig.27 the appendix (60) it is lowered, that is, pushed by the spring (560) towards the surface of the cam (7), not visible in these figures, and for this reason the pin (6) is in position of engagement of the corresponding track (9) of the cam (7). In Fig. 28 and Fig.29 the appendix (60) is raised, that is, moved away from the cam surface (7), not visible in these figures, and for this reason the pin (6) is in position of disengagement from the corresponding track (9) of the cam (7). In Figs.26-29 is also represented a through hole (562) on the back of the fork (5) which serves to fit the latter on the cam (7).

With a sequential gearbox in accordance with this invention it is possible to have a dual mode of disengaging the driven shaft (1) from the main shaft (110): a first conventional mode, which provides to position the cam (7) in neutral position (position in which all the pins of the forks 5 are in their respective tracks and the clutches 4 carried by the same forks do not engage any of the gear wheels of the driven shaft 1), and a second mode which provides to disengage the fork (5) in use by the respective track (9) of the cam (7).

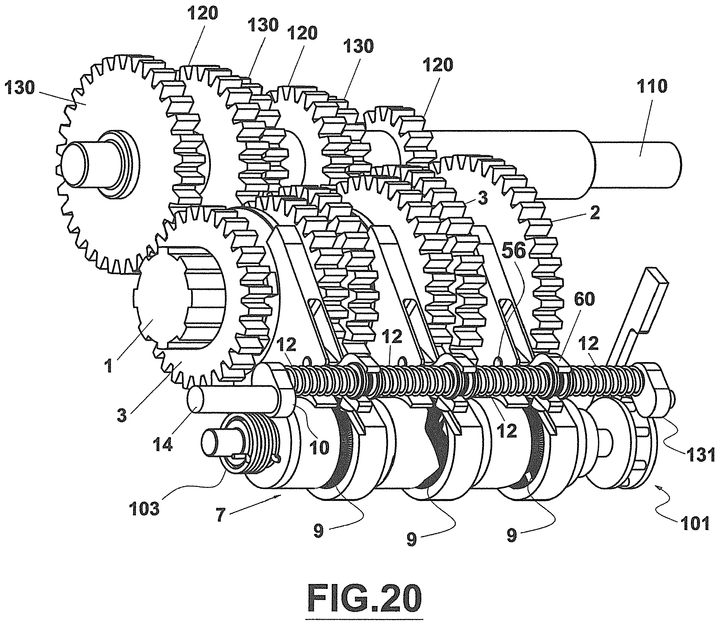

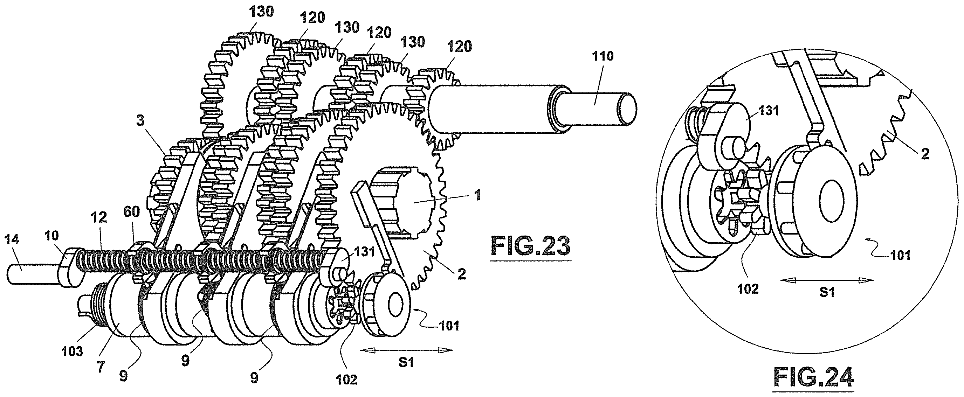

In Figs. 20-24 is illustrated a further embodiment of a mechanical sequential gearbox in accordance with the present invention, in which the cam (7) is connected to automatic reset means of the neutral position of the same cam (7). More particularly, the selector (101) is adapted to be axially moved along the axis of the cam (7), as indicated by arrow "S1", so as to assume a position of insertion in the cam (7), as in Figs. 20-22, and an extracted position, as in Figg.23-24. For this purpose, the selector (101) is provided with a shaped appendix (102) insertable in a cavity (70) of the cam (7) shaped in the same way. The extracted position of the selector (101) illustrated in Fig. 23 and Fig.24 may be achieved using, for example, a cable transmission (not visible in the drawings) connected to a lever positioned in the vehicle driver or by another type of actuator which is manually operated or electrically or electro-pneumatically. On opposite side in respect to the selector (101), a torsion spring (103) is mounted, spring which determines the rotation of the cam (7) about its axis when the selector (101) is disengaged from the cam (7). In practice, the spring (103) is loaded in the normal operation of the gearbox, that is, when the cam (7) is rotated by the driver in the selection phase of the selected gears, and it is discharged, bringing the cam (7) in the neutral position when the driver switches off the selector (101) of the cam (7).

It is understood that the cam (7) can be equipped with a single track for the pins (6) of forks (5), instead of a series of individual tracks. In this case, the single track is shaped so as to perform the same function of the individual tracks (9), previously mentioned.

It is also understood that the cam (7) with the selector (101) is an example of a control member of the forks (5), being, said member, adapted to control the positioning of the forks as desired by the pilot; and the group of springs (12) constitutes a centralization member for the forks (5), that is, a member arranged to dispose the forks (5) in an intermediate position between the corresponding gear wheels (2, 3) of the transmission shaft (1) when the fork (5) is disengaged from the control mechanism (7, 101), said intermediate position being a position in which the clutch (4) carried by each fork (5) is disengaged from the toothed wheels (2, 3) of the transmission shaft (1).

According to the example described above, the control member of the forks, the disengagement member and the member for the repositioning of the same forks in an intermediate disengaged position, are constituted by separate devices. This has the advantage of providing a sequential gearbox capable of performing the functions described previously adding to a traditional mechanical sequential gearbox only the group formed by the disengagement member with the rod (13) and by the repositioning member constituted by the springs (12) fitted on the same rod, without having to modify the operation or the basic structure of the gear shifting system.

The foregoing description illustrates, therefore, a mechanical sequential gearbox, comprising a predetermined number of modules (Y) each of which comprises a pair of toothed wheels (2,3) aligned along the axis (x) of a first shaft (1) and adapted to engage corresponding toothed wheels (120, 130) carried by a second shaft (110), wherein each of the toothed wheels (2, 3) of the first shaft (1) is idly mounted on the latter and is adapted to be mechanically connected with it by means of a clutch (4) which, in turn, is carried by a fork (5) adapted to slide parallel to the first shaft (1) to move the clutch (4) towards one or the other of the toothed wheels (2, 3) between which the same coupling (4) is arranged, and in which each fork (5) is actuated by a control member (7, 101) to which the same fork (5) is mechanically constrained, characterized in that it comprises disconnecting means adapted to disengage each fork (5) by said control member (7, 101) and repositioning means of each fork (5) adapted to dispose the same in an intermediate position between the corresponding toothed wheels (2, 3) of the first shaft (1) when the fork (5) is disengaged from the control member (7, 101), said intermediate position being a position in which the clutch (4) carried by the fork (5) is disengaged from the toothed wheels (2, 3) of the first shaft (1).

According to an aspect of the invention, the said repositioning means for repositioning the fork (5) are elastic means.

According to another aspect of the invention the said control member comprises a desmodromic cam (7) with one or more tracks (9) in which is normally inserted a pin (6) exhibited by each fork (5) on a rear side thereof, in that said disconnecting means are adapted to disengage said pin (6) from said tracks (9) of the cam (7) whatever the position of the latter, and in that the position of the cam (7) is controlled by a cam position selector (101).

According to a further aspect of the invention each of said pins (6) is provided with an appendix (60) and said disconnecting means comprise a rod (13) engaging said appendix (60) and adapted to assume a first position in which the pins (6) are inserted in said tracks (9) and a second position in which the pins (6) are disengaged from the tracks (9).

According to another aspect of the invention the said repositioning means for repositioning the fork (5) are constituted by elastic elements (12) positioned on said rod (13).

Furthermore, said elastic elements (12) are helical springs fitted on the rod (13).

Again, said control member (7, 101) is connected to an automatic positioning device (103) adapted to place it in a position such that the forks (5) resulting in position of disengagement of the respective clutches (4) from the corresponding toothed wheels (2, 3) of the first shaft (1) can be re-connected to the same control member (7, 101).

It is also described the fact that the said disconnecting means and said repositioning means are constituted by two separate devices.

In practice the details of execution may vary in any equivalent way for what concerns the individual elements described and illustrated and to their mutual arrangement, without thereby departing from the scope of the adopted solution and thus remaining within the limits of the protection afforded by the this patent as defined by the claims.

## Claims

1. Mechanical sequential gearbox, comprising a predetermined number of modules (Y) each of which comprises a pair of toothed wheels (2,3) aligned along the axis (x) of a first shaft (1) and adapted to engage corresponding toothed wheels (120, 130) carried by a second shaft (110), wherein each of the toothed wheels (2, 3) of the first shaft (1) is idly mounted on the latter and is adapted to be mechanically connected with it by means of a clutch (4) which, in turn, is carried by a fork (5) adapted to slide parallel to the first shaft (1) to move the clutch (4) towards one or the other of the toothed wheels (2, 3) between which the same coupling (4) is arranged, and in which each fork (5) is actuated by a control member (7, 101) to which the same fork (5) is mechanically constrained, wherein the gearbox comprises disconnecting means adapted to disengage each fork (5) by said control member (7, 101), **characterized in that** it comprises repositioning means of each fork (5) adapted to dispose the same in an intermediate position between the corresponding toothed wheels (2, 3) of the first shaft (1) when the fork (5) is disengaged from the control member (7, 101), said intermediate position being a position in which the clutch (4) carried by the fork (5) is disengaged from said toothed wheels (2, 3) of the first shaft (1).

2. Sequential gearbox according to claim 1 **characterized in that** the said repositioning means for repositioning the fork (5) are elastic means.

3. Sequential gearbox according to claim 1, **characterized in that** each fork (5) has a front side facing the shaft (1) and an opposite rear side, **in that** said control member comprises a desmodromic cam (7) with one or more tracks (9) in which is normally inserted a pin (6) exhibited by each fork (5) on a rear side thereof, **in that** said disconnecting means are adapted to disengage said pin (6) from said tracks (9) of the cam (7) whatever the position of the latter, and **in that** the position of the cam (7) is controlled by a cam position selector (101).

4. Sequential gearbox according to claim 3 **characterized in that** each of said pins (6) is provided with an appendix (60) and said disconnecting means comprise a rod (13) engaging said appendix (60) and adapted to assume a first position in which the pins (6) are inserted in said tracks (9) and a second position in which the pins (6) are disengaged from the tracks (9).

5. Sequential gearbox according to claim 4 **characterized in that** the said repositioning means for repositioning the fork (5) are constituted by elastic elements (12) positioned on said rod (13).

6. Sequential gearbox according to claim 5 **characterized in that** said elastic elements (12) are helical springs fitted on the rod (13).

7. Sequential gearbox according to one or more of the preceding claims **characterized in that** said control member (7, 101) is connected to an automatic positioning device (103) adapted to place it in a position such that the forks (5) resulting in position of disengagement of the respective clutches (4) from the corresponding toothed wheels (2, 3) of the first shaft (1) can be re-connected to the same control member (7, 101).

8. Sequential gearbox according to one or more of the preceding claims **characterized in that** said disconnecting means and said repositioning means are constituted by two separate devices.

9. Sequential gearbox according to claim 4 **characterized in that** said appendix (60) is a mobile appendix that is moved between a first position determined by the first position of the rod (13) and a second position determined by the second position of the rod (13).

10. Sequential gearbox according to claim 9 **characterized in that** said appendix (60) is formed on a lever connected to an arm (500) of the respective fork (5) by a pin (56) with axis parallel to that of said first and the second shaft.

## Patentansprüche

1. Mechanisches sequentielles Getriebe, eine vorbestimmte Anzahl von Modulen (Y) umfassend, von denen jedes ein Paar Zahnräder (2, 3) umfasst, die entlang der Achse (x) einer ersten Welle (1) ausgerichtet und angepasst sind, in entsprechende Zahnräder (120, 130) einzugreifen, die durch eine zweite Welle (110) getragen werden,
wobei jedes der Zahnräder (2, 3) der ersten Welle (1) freilaufend auf letzterer montiert und angepasst ist, um damit mechanisch mittels einer Kupplung (4) verbunden zu werden, welche wiederum durch eine Gabel (5) getragen wird, die angepasst ist, um parallel zur ersten Welle (1) zu gleiten, um die Kupplung (4) zu einem oder dem anderen der Zahnräder (2, 3) zu bewegen, zwischen denen dieselbe Kopplung (4) angeordnet ist, und in dem jede Gabel (5) durch ein Steuerungsglied (7, 101) betätigt wird, mit dem dieselbe Gabel (5) mechanisch zwangsgekoppelt ist, wobei das Getriebe Mittel zum Auskuppeln umfasst, die angepasst sind, um jede Gabel (5) durch das Steuerungsglied (7, 101) zu entkuppeln, **dadurch gekennzeichnet, dass** es Neupositionierungsmittel für jede Gabel (5) umfasst, die angepasst sind, um dieselbe in eine Zwischenposition zwischen den entsprechenden Zahnrädern (2, 3) der ersten Welle (1) anzuordnen, wenn die Gabel (5) von dem Steuerungsglied (7, 101) entkuppelt ist, wobei die Zwischenposition eine Position ist, in der die Kupplung (4), die von der Gabel (5) getragen wird, von den Zahnrädern (2, 3) der ersten Welle (1) entkuppelt ist.

2. Sequentielles Getriebe nach Anspruch 1, **dadurch gekennzeichnet, dass** die Neupositionierungsmittel zum Neupositionieren der Gabel (5) elastische Mittel sind.

3. Sequentielles Getriebe nach Anspruch 1, **dadurch gekennzeichnet, dass** jede Gabel (5) eine Vorderseite, die der Welle (1) zugewendet ist, und eine gegenüberliegende Rückseite aufweist, dadurch, dass das Steuerungsglied einen desmodromischen Nocken (7) mit einer oder mehreren Spuren (9) umfasst, in welche normalerweise ein Zapfen (6) eingeführt ist, der durch jede Gabel (5) auf einer Rückseite davon ausgestellt ist, dadurch, dass die Mittel zum Auskuppeln angepasst sind, um den Zapfen (6) von den Spuren (9) des Nockens (7) in egal welcher Position von letzterer zu entkuppeln, und dadurch, dass die Position des Nockens (7) durch einen Nockenpositionswähler (101) gesteuert wird.

4. Sequentielles Getriebe nach Anspruch 3, **dadurch gekennzeichnet, dass** jeder der Zapfen (6) mit einem Fortsatz (60) bereitgestellt ist, und die Mittel zum Auskuppeln ein Gestänge (13) umfassen, das in den Fortsatz (60) eingreift und angepasst ist, um eine erste Position zu übernehmen, in der die Zapfen (6) in die Spuren (9) eingeführt werden und eine zweite Position, in der die Zapfen (6) von den Spuren (9) entkuppelt sind.

5. Sequentielles Getriebe nach Anspruch 4, **dadurch gekennzeichnet, dass** die Neupositionierungsmittel zum Neupositionieren der Gabel (5) durch elastische Elemente (12) gebildet werden, die auf dem Gestänge (13) positioniert sind.

6. Sequentielles Getriebe nach Anspruch 5, **dadurch gekennzeichnet, dass** die elastischen Elemente (12) Schraubenfedern sind, die auf dem Gestänge (13) montiert sind.

7. Sequentielles Getriebe nach einem oder mehreren der vorstehenden Ansprüche, **dadurch gekennzeichnet, dass** das Steuerungsglied (7, 101) mit einer automatischen Positioniervorrichtung (103) verbunden ist, die angepasst ist, um sie in eine solche Position zu platzieren, dass die Gabeln (5), die in einer Entkuppelposition der jeweiligen Kupplungen (4) von den entsprechenden Zahnrädern (2, 3) der ersten Welle (1) resultieren, erneut mit demselben Steuerungsglied (7, 101) verbunden werden können.

8. Sequentielles Getriebe nach einem oder mehreren der vorstehenden Ansprüche, **dadurch gekennzeichnet, dass** die Mittel zum Auskuppeln und die Neupositionierungsmittel durch zwei getrennte Vorrichtungen gebildet werden.

9. Sequentielles Getriebe nach Anspruch 4, **dadurch gekennzeichnet, dass** der Fortsatz (60) ein beweglicher Fortsatz ist, der zwischen einer ersten Position, die durch die erste Position des Gestänges (13) bestimmt wird, und einer zweiten Position bewegt wird, die durch die zweite Position des Gestänges (13) bestimmt wird.

10. Sequentielles Getriebe nach Anspruch 9, **dadurch gekennzeichnet, dass** der Fortsatz (60) auf einem Hebel gebildet ist, der durch einen Stift (56) mit einer Achse parallel zu jener der ersten und der zweiten Welle mit einem Arm (500) der jeweiligen Gabel (5) verbunden ist.

## Revendications

1. Boîte de vitesses séquentielle mécanique comprenant un nombre prédéterminé de modules (Y), dont chacun comprend une paire de roues dentées (2, 3) alignées le long de l'axe (x) d'un premier arbre (1) et adaptées pour mettre en prise des roues dentées correspondantes (120, 130) portées par un second arbre (110),
dans laquelle chacune des roues dentées (2, 3) du premier arbre (1) est montée en rotation folle sur ce dernier et est adaptée pour être raccordée mécaniquement à celui-ci au moyen d'un embrayage (4) qui, à son tour, est porté par une fourche (5) adaptée pour coulisser parallèlement au premier arbre (1) pour déplacer l'embrayage (4) vers une ou l'autre des roues dentées (2, 3) entre lesquelles le même couplage (4) est agencé, et dans lequel chaque fourche (5) est actionnée par un élément de commande (7, 101) auquel la même fourche (5) est mécaniquement contrainte, dans lequel la boîte de vitesses comprend des moyens de déconnexion adaptés pour mettre hors prise chaque fourche (5) par ledit élément de commande (7, 101), **caractérisée en ce qu'**elle comprend des moyens de repositionnement de chaque fourche (5) adaptés pour disposer cette dernière dans une position intermédiaire entre les roues dentées correspondantes (2, 3) du premier arbre (1) lorsque la fourche (5) est mise hors prise de l'élément de commande (7, 101), ladite position intermédiaire étant une position dans laquelle l'embrayage (4) porté par la fourche (5) est mis hors prise desdites roues dentées (2, 3) du premier arbre (1).

2. Boîte de vitesses séquentielle selon la revendication 1, **caractérisée en ce que** lesdits moyens de repositionnement pour le repositionnement de la fourche (5) sont des moyens élastiques.

3. Boîte de vitesses séquentielle selon la revendication 1, **caractérisée en ce que** chaque fourche (5) présente un côté avant faisant face à l'arbre (1) et un côté arrière opposé, **en ce que** ledit élément de commande comprend une came desmodromique (7) avec une ou plusieurs pistes (9), dans lesquelles est normalement insérée une goupille (6) exposée par chaque fourche (5) sur un côté arrière de celle-ci, **en ce que** lesdits moyens de déconnexion sont adaptés pour mettre hors prise ladite goupille (6) desdites pistes (9) de la came (7) indépendamment de la position de cette dernière, et **en ce que** la position de la came (7) est commandée par un sélectionneur de position de came (101).

4. Boîte de vitesses séquentielle selon la revendication 3, **caractérisée en ce que** chacune desdites goupilles (6) est dotée d'un appendice (60) et lesdits moyens de déconnexion comprennent une tige (13) mettant en prise ledit appendice (60) et adaptée pour adopter une première position dans laquelle les goupilles (6) sont insérées dans lesdites pistes (9) et une seconde position dans laquelle les goupilles (6) sont mises hors prise des pistes (9).

5. Boîte de vitesses séquentielle selon la revendication 4, **caractérisée en ce que** lesdits moyens de repositionnement pour le repositionnement de la fourche (5) sont constitués par des éléments élastiques (12) positionnés sur ladite tige (13).

6. Boîte de vitesses séquentielle selon la revendication 5, **caractérisée en ce que** lesdits éléments élastiques (12) sont des ressorts hélicoïdaux insérés sur la tige (13).

7. Boîte de vitesses séquentielle selon l'une ou plusieurs des revendications précédentes, **caractérisée en ce que** ledit élément de commande (7, 101) est raccordé à un dispositif de positionnement automatique (103) adapté pour le placer dans une position de sorte que les fourches (5) résultant en la position de mise hors prise des embrayages respectifs (4) des roues dentées correspondantes (2, 3) du premier arbre (1) puissent être reconnectées au même élément de commande (7, 101).

8. Boîte de vitesses séquentielle selon l'une ou plusieurs des revendications précédentes, **caractérisée en ce que** lesdits moyens de déconnexion et lesdits moyens de repositionnement sont constitués par deux dispositifs séparés.

9. Boîte de vitesses séquentielle selon la revendication 4, **caractérisée en ce que** ledit appendice (60) est un appendice mobile qui est déplacé entre une première position déterminée par la première position de la tige (13) et une seconde position déterminée par la seconde position de la tige (13).

10. Boîte de vitesses séquentielle selon la revendication 9, **caractérisée en ce que** ledit appendice (60) est formé sur un levier raccordé à un bras (500) de la fourche (5) respective par une goupille (56) avec un axe parallèle à celui desdits premier et second arbres.
